# EUROPEAN PATENT SPECIFICATION

(11) **EP 2 618 436 B1**
(45) Date of publication and mention of the grant of the patent: **07.03.2018**
(21) Application number: 13150908.5
(22) Date of filing: 11.01.2013
(51) Int. Cl.: H02G 3/04, H02G 3/22

(54) **End seal of a flexible conduit and a method for manufacturing such an end seal**
Dichtung für das Ende eines Schlauches und Verfahren zur Herstellung dieses
joint d'étanchéité à l'extrémité d'un conduit flexible et son procédé de fabrication

(30) Priority: 20.01.2012 SE 1250032
(43) Date of publication of application: 24.07.2013
(73) Proprietor: Schneider Electric Industries SAS, 92500 Rueil-Malmaison (FR)
(72) Inventor: Kullolli, Dharmveer M, 580001 Karnataka (IN); Wängstre, Håkan, 611 37 Nyköping (SE)
(74) Representative: Groth & Co. KB

(56) References cited:
- FR-A2- 2 323 255
- GB-A- 2 191 902
- US-A- 4 287 386
- US-A1- 2002 033 269
- US-B1- 6 211 465
- US-B1- 6 417 453

## Description

### Technical Field

The present invention relates to an end seal that is intended to seal between a number of conductors pulled in a wiring tube and the wiring tube wherein the seal is connected to the end of the wiring tube. The wiring tube is of a flexible type having equidistant grooves with intermediate ridges.

### Background of the Invention

Previously known seals for flexible wiring tubes, for the elimination of air migrations in the wiring tubes and in the buildings, consist of an essentially cylindrical elastic plug, which is provided with a penetratable diaphragm. The application of such a seal is made by each conductor, which has been pulled through the wiring tube, being allowed to penetrate the diaphragm of the elastic plug, the plug being displaced on the conductors to the end of the wiring tube where the plug is pressed in, wherein sealing is provided between the conductors and the wiring tube.

A disadvantage of these known types of seals is that the thickness of the elastic plug intrudes on the already narrow space in the wiring tube.

Further disadvantages of these prior art seals are that each conductor has to be brought through the diaphragm of the plug, after which the conductors with a certain inertia can be adjusted in relation to the plug.

A further disadvantage is that the plug may come loose from the wiring tube if an additional length adjustment of the conductors is required, since the plug is frictionally connected to the inside of the wiring tube. In addition, the plug cannot be indestructibly removed from the conductors without all the conductors having to be pulled through the plug.

Because of these disadvantages that are time-consuming, installation engineers or electricians tend to fail to apply these types of seals, wherein the wiring tube will become entirely unsealed.

The prior art document US patent 6211465 discloses a sealed connecting box for fitting a tube to an aperture of a wall. The connecting box includes two shells which are connected by a hinge at their common longitudinal jointing face. In the closed state the connecting box is provided for holding a tube in an aperture of a wall.

### The Object of the Invention

The object of the invention is to provide an end seal for a flexible wiring tube that solves the problems indicated.

One object is to provide an end seal for a flexible wiring tube that allows an application after the conductors have been connected to the respective electrical device.

A further object is to provide an end seal for a flexible wiring tube that can be readily mounted and dismounted at the end of the wiring tube even if conductors already are pulled in the wiring tube.

In addition, the object is to provide an end seal for a flexible wiring tube that is sufficiently fixedly connected to the end of the wiring tube to allow readjustment of the conductors by pulling without risk of the end seal coming loose.

### Summary of the Invention

By the present invention, as the same appears in the independent claims, the above-mentioned objects are met, said disadvantages having been eliminated. Suitable embodiments of the invention are defined in the dependent claims.

The invention concerns an end seal according to the features of claim 1. In one embodiment of the invention, at least one support ring part of the seal is provided with an internally placed friction means. The friction means serves the purpose of grasping around the external surfaces of the wiring tube in order to eliminate axial movement of the end seal and to lock the end seal in the axial direction to the wiring tube when the cables are adjusted by being pulled through the seal.

In one embodiment of the invention, the friction means consists of one or more radially inwardly directed protuberances shaped to engage the notches of the wiring tube. This or these protuberances may be evenly distributed along the inner periphery of the support ring parts in order to distribute the axial forces that may arise on the end seal.

In one embodiment of the invention, the friction means consists of a protuberance that extends along the inner periphery of the entire support ring part. In this embodiment, the axial forces are evenly distributed along the entire periphery of the wiring tube.

In one embodiment of the invention, the two support ring parts are provided with similar friction means. This embodiment further increases the loading symmetry of the support ring.

In one embodiment of the invention, the two friction means consist of or both friction means are covered with a softer material, for instance a styrene-ethylene-butadiene thermoplastic elastomer, than the material of the support ring parts. This embodiment helps to further limit air migrations in the wiring tube by sealingly abutting against the outer surface of the wiring tube and the bottom and sides of the notches.

In one embodiment of the invention, each diaphragm part has a thickness Tₘᵢₙ at the centre of the diaphragm part that is smaller than the thickness Tₘₐₓ at the connection of the diaphragm part to its respective support ring part. This embodiment contributes to the connection of the diaphragm parts to the insulated conductors being improved wherein also the sealing effect is improved.

In one embodiment of the invention, each support ring part consists of half a support ring foldable along a diameter of the sealing ring, the diaphragm parts connecting to each other along the same diameter when the support ring is folded.

The invention also concerns a method for the manufacture of an end seal as defined above with the features of claim 10. Preferably, the support ring is injection-moulded with polypropylene in a moulding tool after which the diaphragm is connected to the support ring by the injection of a styrene-ethylene-butadiene thermoplastic elastomer against the connection position in the support ring. Both these manufacturing steps are carried out in one and the same moulding tool without the detail having to be moved from its position.

Preferably, the injection against the connection position in the support ring is made against radially directed front folds in the support ring. The front folds increase the strength of the attachments of the diaphragm parts.

Preferably, the material polypropylene (PP) is used in the encompassing support ring of the end seal part, and preferably styrene-ethylene-butadiene thermoplastic elastomer (SEBS), which is a thermoplastic rubber, is used in the diaphragm. These two materials are joined by a two-material injection moulding. Accordingly, there is no mounting of the two material types but the materials connect to each other by chemical bond. The relatively hard support ring is produced in a first manufacturing step of the injection moulding. Next, the support ring detail is moved to a second manufacturing step situated in the same moulding tool for injecting the soft material against the support ring detail, the two materials being joined to each other into a complete end seal.

### Brief Description of the Drawings

Now, the invention will be described in more detail with references in connection with the accompanying drawing figures.
- Figure 1: shows a perspective view of an end seal according to the invention mounted on a flexible wiring tube.
- Figure 2: shows Figure 1 in a side view.
- Figure 3: shows a perspective view of a closed end seal according to the invention.
- Figure 4: shows a front view of the closed end seal according to the invention.
- Figure 5: shows a perspective view of an open end seal according to the invention.
- Figure 6: shows a side view of the open end seal according to the invention.
- Figure 7: shows an inner planar view of the open end seal according to the invention.

### Description of the Invention

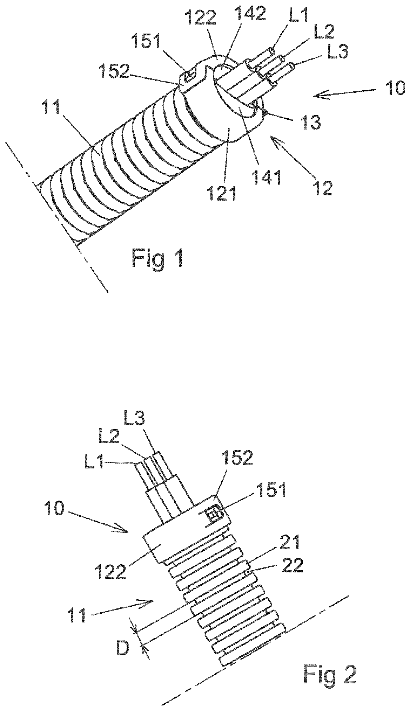

Figure 1 shows an end seal 10 mounted on a flexible wiring tube 11. The end seal 10 comprises a support means in the form of a support ring 12 consisting of a first support ring part 121 and a second support ring part 122. These two support ring parts are interconnected via a hinge joint 13. Furthermore, the first support ring part 121 is provided with a first diaphragm part 141 and the second support ring part 122 provided with a second diaphragm part 142. Furthermore, the first support ring part 121 is provided with a first fixed locking part 151 in the form of a male part and the second support ring part 122 is provided with a second resilient locking part 152 in the form of a female part that can encompass said male part, wherein said locking parts can be snapped together into the position shown in Figure 1. Other forms of the locking parts than those shown in the figures are feasible within the scope of the invention. For instance, the male part may be resilient and be attached by snap action into a female part. Neither the female part has to be a loop or a hole but may be an edge or a hook.

The figure also shows how the two diaphragm parts 141, 142 of the end seal 10 abut against three insulated conductors L1, L2, L3 that have been pulled through the wiring tube 11.

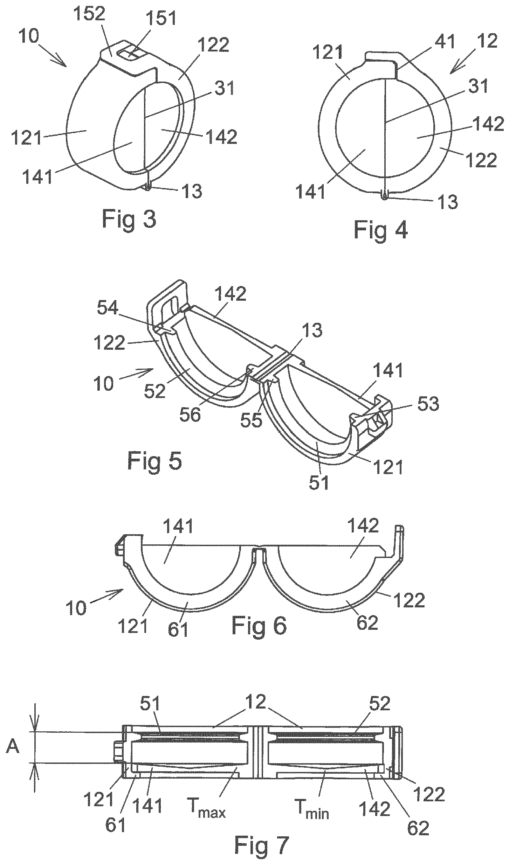

Figure 2 shows the mounted end seal 10 that has been folded around the three insulated conductors L1, L2, L3 and snapped together over the wiring tube 11 by the second locking part 152 having been snapped over the first locking part 151. The figure shows that the flexible wiring tube 11 is formed with equidistant ridges 21 between which equidistant notches 22 are formed. Here, a pitch D is defined as the distance between two adjacent ridges according to the figure. For the folding around of the end seal and snap locking of the same to the wiring tube, the inside of at least one support ring part 122 is provided with a friction means that makes the end seal to be retained on the wiring tube when the conductors are readjusted. Said friction means will be described in more detail under Figure 5.

Figure 3 shows the end seal 10 with its two support ring parts 121, 122 joined to each other by the hinge joint 13 as well as snapped together by the locking parts 151, 152 so as to form said support ring. The figure shows that the two diaphragm parts 141, 142 abut edge to edge with each other along a straight edge line 31.

Figure 4 shows in a front view that the edge line 31, which is defined by the diaphragm parts 141, 142, extends parallel to a diameter of the support ring 12, which diameter when extended extends through the hinge joint 13. Furthermore, the extension of the edge line 31 is selected so that it does not coincide with an inner dividing line 41 between the two support ring parts 121, 122 on the side of the support ring where the locking parts are arranged.

Figure 5 shows the complete end seal 10 from within and unfolded via the hinge joint 13. On the inside of each support ring part 121, 122 a friction means 51, 52 as well as the diaphragm parts 141, 142 are placed, the friction means and the diaphragm parts being situated at an axial distance from each other. Said axial distance is a slightly exceeding the total width of a ridge and a notch on the wiring tube but smaller than the total width of two ridges and two notches. The friction means 51, 52 extend around the inner periphery of the entire end seal 10, the end surfaces 53, 54 and 55, 56, respectively, of the friction means abutting against each other when the end seal is snapped together.

Also other forms of friction means than what has been shown in Figure 5 are covered by the invention, for instance in the form of a number of separate and similar protuberances having the same pitch around the inner periphery of the end seal.

Figure 6 shows the end seal 10 in an unfolded position in a front view, the support ring parts 121, 122 being provided with each a front fold 61, 62 against which the diaphragm parts are injected and accordingly abut. These front folds 61, 62 are plane and have a radial extension and increase the strength of the diaphragm parts 141, 142 and contribute to prevent them from being pulled loose from the support ring parts 121, 122 when the end seal is mounted and the cables are adjusted in the wiring tube.

Figure 7 shows the end seal 10 in an unfolded position internally where the friction means 51, 52 are placed at an axial distance A from the diaphragm parts 141, 142 in relation to the previously defined pitch D between each ridge, see Figure 2, in a wiring tube, wherein said relationship preferably is D < A < 2D. A common value of D is 4 mm and a common value of A is 5 mm in wiring tubes having an outer diameter of 20 mm. The dimensions of A and D, respectively, are adapted to the current outer diameter of the wiring tube, which, for instance, may have the outer diameters 16 mm, 20 mm, 25 mm, 32 mm and 40 mm.

The diaphragm parts 141, 142 are formed so that their thickness Tₘₐₓ is greatest at their respective connection to the support ring parts 121, 122, while their thickness Tₘᵢₙ occurs in the middle of the diaphragm parts. The relationship between said thicknesses is from 0,5 Tₘₐₓ = Tₘᵢₙ to 0,8 Tₘₐₓ = Tₘᵢₙ. This reduction of the thickness of the diaphragms implies a better connection of the diaphragm edges to the insulated conductors when the end seal is mounted around the conductors. Furthermore, there are seen the two front folds 61, 62 against which the diaphragm parts 141, 142 abut so that the connection position of the diaphragm parts in the support ring 12 is limited axially outward.

## Claims

1. End seal (10), connectable at the end of a flexible, notched wiring tube (11), which end seal (10) is arranged to seal a space between cables (L1, L2, L3) pulled in the wiring tube (11) and the proper wiring tube (11) and which seal (10) comprises a support means to which a sealing diaphragm (141, 142) is connected and which, when the end seal (10) is mounted, abuts against said cables, the support means of said end seal (10) comprising a support ring (12) to which the sealing diaphragm (141, 142) is connected, which support ring (12) consists of two support ring parts (121, 122) that are connected to each other by a hinge joint (13), and each support ring part (121, 122) being provided with a diaphragm part (141, 142) as well as each support ring part (121, 122) being provided with a locking part (151, 152) that, on a first support ring part (121), consists of a male part (151) and that, on a second support ring part (122), consists of a female part (152), wherein the support ring parts (121, 122) with their diaphragm parts (141, 142) can, by the locking parts (151, 152), be locked together into a ring-shaped end seal (10), **characterized in that** the diaphragm parts (141, 142) abut edge to edge with each other along a straight edge line (31) which extends parallel to a diameter of the support ring (12) and along the same diameter when the support ring (12) is folded and against said cables (L1, L2, L3) sealing towards the cables when the support ring parts (121, 122) are interlocked.

2. End seal according to claim 1, **characterized in that** at least one support ring part (121, 122) is provided with an internally placed friction means (51, 52) to lock the end seal (10) in the axial direction to the wiring tube (11).

3. End seal according to claim 2, **characterized in that** the friction means (51, 52) consists of one or more inwardly directed protuberances shaped to engage the notches (22) of the wiring tube (11).

4. End seal according to claim 3, **characterized in that** the friction means (51, 52) consists of a protuberance that extends along the inner periphery of the entire support ring part (121, 122).

5. End seal according to any one of claims 2-4, **characterized in that** the two support ring parts (121, 122) are provided with similar friction means (51, 52).

6. End seal according to claim 5, **characterized in that** the two friction means (51, 52) either consist of or are covered with a softer material, for instance a styrene-ethylene-butadiene thermoplastic elastomer, than the material of the support ring parts (121, 122).

7. End seal according to any one of claims 1-6, **characterized in that** each diaphragm part (141, 142) has an edge line (31) so that the edges of the diaphragm parts abut edge to edge with each other along said edge line (31) when the support ring parts (121, 122) are interlocked.

8. End seal according to any one of claims 1-7, **characterized in that** each diaphragm part (141, 142) has a thickness Tₘᵢₙ at the centre of the diaphragm part (141, 142) that is smaller than the thickness Tₘₐₓ of the diaphragm part (141, 142) at the connection of the diaphragm part (141, 142) to its respective support ring part (121, 122).

9. End seal according to any one of claims 1-8, **characterized in that** each support ring part (121, 122) consists of half a support ring (12) foldable into separation along a diameter of the sealing ring, the diaphragm parts connecting to each other along the same diameter when the support ring (12) is folded.

10. Method for the manufacture of an end seal according to any one of claims 1-9, **characterized in that** a sealing diaphragm (141) is connected to a support ring (12) comprising two support ring parts (121, 122) that are connected to each other by a hinge joint (13) and provided with locking parts (151, 152), as well as that each support ring part is provided with a diaphragm part (141, 142) together forming the sealing diaphragm (141), the material of the encompassing support ring (12) being joined to the material of the diaphragm by a two-material injection moulding resulting in a chemical bond between the materials.

11. Method for the manufacture of an end seal according to claim 10, **characterized in that** the support ring (12) is injection-moulded with polypropylene in a moulding tool after which the diaphragm (141, 142) is connected to the support ring (12) by the injection of a styrene-ethylene-butadiene thermoplastic elastomer against a connection position of the diaphragm (141, 142) in the support ring (12).

12. Method for the manufacture of an end seal according to claim 11, **characterized in that** the injection against the connection position in the support ring (12) is made against radially directed front folds (61, 62) in the support ring (12).

## Patentansprüche

1. Enddichtung (10), die mit dem Ende eines flexiblen gekerbten Verkabelungsrohrs (11) verbindbar ist, wobei die Enddichtung (10) zum Abdichten eines Raums zwischen Kabeln (L1, L2, L3), die in dem Verkabelungsrohr (11) gezogen sind, und dem eigentlichen Kabelrohr (11) vorgesehen ist, und wobei die Dichtung (10) ein Stützmittel umfasst, mit dem eine Dichtmembran (141, 142) verbunden ist, und das, wenn die Enddichtung (10) montiert ist, an den Kabeln anliegt, wobei das Stützmittel der Enddichtung (10) einen Stützring (12) umfasst, mit dem die Dichtmembran (141, 142) verbunden ist, wobei der Stützring (12) aus zwei Stützringteilen (121, 122) besteht, die miteinander über ein Scharniergelenk (13) verbunden sind, und jedes Stützringteil (121, 122) mit einem Membranteil (141, 142) ausgestattet ist sowie jedes Stützringteil (121, 122) mit einem Verriegelungsteil (151, 152) ausgestattet ist, das auf einem ersten Stützringteil (121) aus einem männlichen Teil (151) besteht, und das auf einem zweiten Stützringteil (122) aus einem weiblichen Teil (152) besteht, wobei die Stützringteile (121, 122) mit ihren Membranteilen (141, 142) durch die Verriegelungsteile (151, 152) miteinander zu einer ringförmigen Enddichtung (10) verriegelt werden können, **dadurch gekennzeichnet, dass** die Membranteile (141, 142) Kante an Kante aneinander entlang einer geraden Kantenlinie (31), die sich parallel zu einem Durchmesser des Stützrings (12) erstreckt, und entlang des gleichen Durchmessers, wenn der Stützring (12) gefaltet wird, und an dem Kabel (L1, L2, L3) anliegen, um zu den Kabeln hin abzudichten, wenn die Stützringteile (121, 122) miteinander verriegelt sind.

2. Enddichtung nach Anspruch 1, **dadurch gekennzeichnet, dass** mindestens ein Stützringteil (121, 122) mit intern platzierten Reibungsmitteln (51, 52) ausgestattet ist, um die Enddichtung (10) in der axialen Richtung an dem Verkabelungsrohr (11) zu verriegeln.

3. Enddichtung nach Anspruch 2, **dadurch gekennzeichnet, dass** das Reibungsmittel (51, 52) aus einem oder mehreren einwärts gerichteten Vorsprüngen besteht, die so geformt sind, dass sie in die Kerben (22) des Verkabelungsrohrs (11) greifen.

4. Enddichtung nach Anspruch 3, **dadurch gekennzeichnet, dass** das Reibungsmittel (51, 52) aus einem Vorsprung besteht, der sich entlang des Innenumfangs des gesamten Stützringteils (121, 122) erstreckt.

5. Enddichtung nach einem der Ansprüche 2 bis 4, **dadurch gekennzeichnet, dass** die beiden Stützringteile (121, 122) mit ähnlichen Reibungsmitteln (51, 52) ausgestattet sind.

6. Enddichtung nach Anspruch 5, **dadurch gekennzeichnet, dass** die beiden Reibungsmittel (51, 52) entweder aus einem weicheren Material als dem Material der Stützringteile (121, 122) bestehen oder damit bedeckt sind, beispielsweise einem thermoplastischen Styrol-Ethylen-Butadien-Elastomer.

7. Enddichtung nach einem der Ansprüche 1 bis 6, **dadurch gekennzeichnet, dass** jedes Membranteil (141, 142) eine Kantenlinie (31) aufweist, so dass die Kanten der Membranteile Kante an Kante entlang der Kantenlinie (31) aneinander anliegen, wenn die Stützringteile (121, 122) verriegelt sind.

8. Enddichtung nach einem der Ansprüche 1 bis 7, **dadurch gekennzeichnet, dass** jedes Membranteil (141, 142) eine Dicke Tₘᵢₙ in der Mitte des Membranteils (141, 142) aufweist, die kleiner als die Dicke Tₘₐₓ des Membranteils (141, 142) an der Verbindungsstelle des Membranteils (141, 142) mit seinem jeweiligen Stützringteil (121, 122) ist.

9. Enddichtung nach einem der Ansprüche 1 bis 8, **dadurch gekennzeichnet, dass** jedes Stützringteil (121, 122) aus einer Hälfte eines Stützringteils (12) besteht, die entlang eines Durchmessers des Stützrings in einen getrennten Zustand faltbar ist, wobei die Membranteile sich entlang des gleichen Durchmessers miteinander verbinden, wenn der Stützring (12) gefaltet wird.

10. Verfahren zur Herstellung einer Enddichtung nach einem der Ansprüche 1 bis 9, **dadurch gekennzeichnet, dass** eine Dichtmembran (141) mit einem Stützring (12) verbunden wird, der zwei Stützringteile (121, 122) umfasst, die durch ein Scharniergelenk (13) miteinander verbunden sind und mit Verriegelungsteilen (151, 152) ausgestattet sind, sowie jedes Stützringteil mit einem Membranteil (141, 142) ausgestattet ist, die zusammen die Dichtmembran (141) bilden, wobei das Material des umgebenden Stützrings (12) mit dem Material der Membran durch einen Zweikomponentenspritzguss verbunden ist, was zu einer chemischen Bindung zwischen den Komponenten führt.

11. Verfahren zur Herstellung einer Enddichtung nach Anspruch 10, **dadurch gekennzeichnet, dass** der Stützring (12) mit Polypropylen in einem Formungswerkzeug spritzgegossen wird, wonach die Membran (141, 142) durch das Einspritzen eines thermoplastischen Styrol-Ethylen-Butadien-Elastomers gegen eine Verbindungsposition der Membran (141, 142) in dem Stützring (12) mit dem Stützring (12) verbunden wird.

12. Verfahren zur Herstellung einer Enddichtung nach Anspruch 11, **dadurch gekennzeichnet, dass** das Einspritzen gegen die Verbindungsposition in dem Stützring (12) gegen radial gerichtete vordere Falten (61, 62) in dem Stützring (12) erfolgt.

## Revendications

1. Joint d'étanchéité d'extrémité (10), connectable à l'extrémité d'un tube de câblage encoché flexible (11), ledit joint d'étanchéité d'extrémité (10) étant agencé de manière à étanchéifier un espace entre des câbles (L1, L2, L3) tirés dans le tube de câblage (11) et le tube de câblage proprement dit (11), et ledit joint d'étanchéité (10) comprenant des moyens de support auxquels un diaphragme d'étanchéité (141, 142) est connecté et qui, lorsque le joint d'étanchéité d'extrémité (10) est monté, bute contre lesdits câbles, les moyens de support dudit joint d'étanchéité d'extrémité (10) comprenant un anneau de support (12) auquel le diaphragme d'étanchéité (141, 142) est connecté, ledit anneau de support (12) étant constitué de deux parties d'anneau de support (121, 122) qui sont connectées l'une à l'autre par un joint à charnière (13), et chaque partie d'anneau de support (121, 122) est pourvue d'une partie de diaphragme (141, 142), ainsi que chaque partie d'anneau de support (121, 122) est pourvue d'une partie de verrouillage (151, 152) qui, sur une première partie d'anneau de support (121), consiste en une partie mâle (151) et qui, sur une seconde partie d'anneau de support (122), consiste en une partie femelle (152), dans lequel les parties d'anneau de support (121, 122) avec leurs parties de diaphragme (141, 142) peuvent, par les parties de verrouillage (151, 152), être verrouillées l'une à l'autre en un joint d'étanchéité d'extrémité de forme annulaire (10), **caractérisé en ce que** les parties de diaphragme (141, 142) butent bord à bord l'une avec l'autre le long d'une ligne de bord droite (31) qui s'étend parallèlement à un diamètre de l'anneau de support (12) et le long du même diamètre lorsque l'anneau de support (12) est plié et contre lesdits câbles (L1, L2, L3) pour isoler les câbles lorsque les parties d'anneau de support (121, 122) sont verrouillées mutuellement.

2. Joint d'étanchéité d'extrémité selon la revendication 1, **caractérisé en ce qu'**au moins une partie d'anneau de support (121, 122) est pourvue de moyens de frottement disposés intérieurement (51, 52) servant à verrouiller le joint d'étanchéité d'extrémité (10) dans la direction axiale sur le tube de câblage (11).

3. Joint d'étanchéité d'extrémité selon la revendication 2, **caractérisé en ce que** les moyens de frottement (51, 52) consistent en une ou ou plusieurs protubérance(s) orientée(s) vers l'intérieur formées de manière à s'engager dans les encoches (22) du tube de câblage (11).

4. Joint d'étanchéité d'extrémité selon la revendication 3, **caractérisé en ce que** les moyens de frottement (51, 52) consistent en une protubérance qui s'étend le long de la périphérie intérieure de la totalité de la partie d'anneau de support (121, 122).

5. Joint d'étanchéité d'extrémité selon l'une quelconque des revendications 2 à 4, **caractérisé en ce que** les deux parties d'anneau de support (121, 122) sont pourvues de moyens de frottement similaires (51, 52).

6. Joint d'étanchéité d'extrémité selon la revendication 5, **caractérisé en ce que** les deux moyens de frottement (51, 52) soit sont constitués soit sont recouverts d'un matériau plus tendre, par exemple un élastomère thermoplastique de styrène-éthylène-butadiène, que le matériau qui constitue les parties d'anneau de support (121, 122).

7. Joint d'étanchéité d'extrémité selon l'une quelconque des revendications 1 à 6, **caractérisé en ce que** chaque partie de diaphragme (141, 142) présente une ligne de bord (31) de telle sorte que les bords de la partie de diaphragmes butent bord à bord l'un avec l'autre le long de ladite ligne de bord (31) lorsque les parties d'anneau de support (121, 122) sont verrouillées mutuellement.

8. Joint d'étanchéité d'extrémité selon l'une quelconque des revendications 1 à 7, **caractérisé en ce que** chaque partie de diaphragme (141, 142) présente une épaisseur Tₘᵢₙ au centre de la partie de diaphragme (141, 142) qui est plus petite que l'épaisseur Tₘₐₓ de la partie de diaphragme (141, 142) à la connexion de la partie de diaphragme (141, 142) à sa partie d'anneau de support respective (121, 122).

9. Joint d'étanchéité d'extrémité selon l'une quelconque des revendications 1 à 8, **caractérisé en ce que** chaque partie d'anneau de support (121, 122) consiste en une moitié d'anneau de support (12) pliable pour séparation le long d'un diamètre de l'anneau d'étanchéité, les parties de diaphragme se connectant l'une à l'autre le long du même diamètre lorsque l'anneau de support (12) est plié.

10. Procédé de fabrication d'une joint d'étanchéité d'extrémité selon l'une quelconque des revendications 1 à 9, **caractérisé en ce qu'**un diaphragme d'étanchéité (141) est connecté à un anneau de support (12) composé de deux parties d'anneau de support (121, 122) qui sont connectées l'une à l'autre par un joint à charnière (13) et qui sont pourvues de parties de verrouillage (151, 152), et **en ce que** chaque partie d'anneau de support est pourvue d'une partie de diaphragme (141, 142) qui forment ensemble le diaphragme d'étanchéité (141), le matériau de l'anneau de support enveloppant (12) étant joint au matériau du diaphragme par un moulage par injection des deux matériaux qui résulte en une liaison chimique entre les matériaux.

11. Procédé de fabrication d'un joint d'étanchéité d'extrémité selon la revendication 10, **caractérisé en ce que** l'anneau de support (12) est moulé par injection avec du polypropylène dans un outil de moulage, après quoi le diaphragme (141, 142) est connecté à l'anneau de support (12) par l'injection d'un élastomère thermoplastique de styrène-éthylène-butadiène contre une position de connexion du diaphragme (141, 142) dans l'anneau de support (12).

12. Procédé de fabrication d'un joint d'étanchéité d'extrémité selon la revendication 11, **caractérisé en ce que** l'injection contre la position de connexion dans l'anneau de support (12) est effectuée contre des plis avant orientés radialement (61, 62) dans l'anneau de support (12).
